# EUROPÄISCHE PATENTSCHRIFT

(11) **EP 1 167 077 B1**
(45) Veröffentlichungstag und Bekanntmachung des Hinweises auf die Patenterteilung: **17.10.2007**
(21) Anmeldenummer: 01111884.1
(22) Anmeldetag: 17.05.2001
(51) Int. Cl.: B60B 7/00, B60B 7/02, B60B 7/06, B60B 7/08

(54) **Schutzabdeckung für Automobilfelgen**
Protective cover for rims of motor vehicle
Couvercle de protection pour jantes de véhicule automobile

(30) Priorität: 23.06.2000 DE 20011142 U
(43) Veröffentlichungstag der Anmeldung: 02.01.2002
(73) Patentinhaber: Polyplast Sander GmbH, 90518 Altdorf (DE)
(72) Erfinder: Sander, Uli, 90559 Burgthann (DE)
(74) Vertreter: Hübner, Gerd

(56) Entgegenhaltungen:
- EP-A- 0 384 459
- DE-U- 29 710 223
- DE-U- 29 810 270

## Beschreibung

Die Erfindung betrifft eine Schutzabdeckung für Automobilfelgen mit den im Oberbegriff des Schutzanspruches 1 angegebenen Merkmalen.

Derartige Schutzabdeckungen sind aus der DE 297 10 223 U1 bekannt. Sie dienen für den Schutz von Automobilfelgen während der Produktion des Fahrzeuges und der Überführung zum Händler. Dies ist insbesondere relevant bei Fahrzeugen, die nach Übersee per Schiff transportiert werden, da bekanntermaßen die salzhaltige Meerluft zu einer rapiden Korrosion der Bremsscheiben führt. Werden die üblicherweise vorhandenen Felgenöffnungen nun durch eine solche Schutzabdeckung verschlossen, wird der Korrosionseffekt drastisch vermindert.

Die aus dem oben angegebenen Stand der Technik bekannte Schutzabdekkung weist eine die Außenseite der Felge zumindest teilweise abdeckende Scheibe auf, an die zentral ein im wesentlichen zylindrischer Befestigungskopf einstückig angeformt ist. Dieser Befestigungskopf ist in die zentrale Felgenöffnung einsteckbar und wird dort mit Hilfe von Rastvorsprüngen verankert.

Nachteilig bei dieser bekannten Schutzabdeckung ist die Tatsache, daß die Rastvorsprünge an der Mantelwand des zylindrischen Befestigungskopfes vorgesehen sind und dort über dessen Kontur hinausstehen. Zum Einrasten der Schutzabdeckung in die entsprechende Felgenöffnung muß daher ein hoher Widerstand überwunden werden. Ferner sind die radial abstehenden Rastvorsprünge in formtechnischer Hinsicht problematisch, da zur Entformung der beispielsweise durch Spritzgießen oder Tiefziehen gefertigten Schutzabdeckung aus dem Formwerkzeug entfernbare Schieber zur Freigabe der Rastvorsprünge vorhanden sein müssen.

Schließlich ist die vorbekannte Schutzabdeckung in der Ausgestaltung ihrer Scheibe vergleichsweise komplex aufgebaut, da ein äußerer, praktisch gerade durchgehender Scheibenteil mit einer aus der Scheibenebene herausgeformten Ringscheibe kombiniert ist, welche durch ihre Schrägstellung für eine Anpassung der Wölbung der Schutzabdeckung an die Form der Autofelge sorgt.

Insgesamt ist die vorbekannte Schutzabdeckung bezüglich Formgebung und Verrastung mit der jeweiligen Automobilfelge also verbesserungsbedürftig.

Davon ausgehend schlägt die Erfindung laut Kennzeichnungsteil des Anspruches 1 eine von der schlichten Einschub-Verrastung der Schutzabdekkung des Standes der Technik völlig abweichende Konstruktion vor. Die Rastvorsprünge sind nämlich an der Umfangskante der in die Felgenöffnung eingreifenden Deckwand des Befestigungskopfes aneinandergereiht und durch eine spezielle Ausbildung der Deckwand des Befestigungskopfes zwischen einer zurückgezogenen Lösestellung und einer radial nach außen verlagerten Fixierstellung verlagerbar. Die Deckwand des Befestigungskopfes ist dazu als bistabile, nach Art einer Übertotpunkt-Kinematik zwischen einer einwärts bzw. auswärts gewölbten Stellung umlegbare Betätigungsfläche ausgebildet.

Die erfindungsgemäße Ausgestaltung der Schutzabdeckung hat einerseits den Vorteil, daß die Fertigung der Schutzabdeckung mit einwärts gewölbter Stellung der Deckwand und folglich mit Rastvorsprüngen in ihrer zurückgezogenen Lösestellung erfolgen kann, in der sie im wesentlichen parallel zur Rotationsachse der Schutzabdeckung verlaufen. Damit sind keine radial abstehenden Bereiche am Befestigungskopf vorhanden, was die Entformung des fertig hergestellten Gegenstandes erheblich vereinfacht.

Zum anderen ist anwendungstechnisch von Vorteil, daß die Schutzabdekkung nicht gegen den Widerstand der Rastvorsprünge in die Felgenöffnung eingepreßt werden muß. Es genügt, die Schutzabdeckung mit dem Befestigungskopf in die zentrale Felgenöffnung einzustecken und die Deckwand von der einwärts gewölbten Stellung in die auswärts gewölbte Stellung umzuschnappen. Damit hintergreifen die Rastvorsprünge ein entsprechendes Gegenrastelement an der Felgenöffnung und sorgen für eine zuverlässige Fixierung der Schutzabdeckung.

Bevorzugte Ausführungsformen der erfindungsgemäßen Schutzabdeckung sind in den Unteransprüchen angegeben. Daraus ist die bezogen auf den Querschnitt der Scheibe vorgesehene Wellenprofilierung hervorzuheben. Durch diese Wellenprofilierung ist die Ringscheibe quer zu ihrer Hauptebene relativ elastisch, wodurch - entgegen beispielsweise der Schutzabdeckung nach dem eingangs angegebenen Stand der Technik - keine besonderen Formgebungsmaßnahmen für die Anpassung der Schutzabdeckung an einen bestimmten Felgentyp vorgenommen werden müssen. Sofern die Durchmesser der Felge beziehungsweise des Komplettrades und der zentralen Felgenöffnung passen, kann ein und dieselbe Schutzabdeckung mit Felgen unterschiedlicher Einpreßtiefe und Felgenbett-Formgebung verwendet werden.

Weitere Merkmale, Einzelheiten und Vorteile der Erfindung ergeben sich aus der nachfolgenden Beschreibung, in der ein Ausführungsbeispiel des Erfindungsgegenstandes anhand der beigefügten Zeichnung näher erläutert wird. Es zeigen
- Fig. 1: eine Draufsicht auf eine Schutzabdeckung,
- Fig. 2: eine Seitenansicht der Schutzabdeckung aus Pfeilrichtung II nach Fig. 1,
- Fig. 3: eine Detaildraufsicht auf den Befestigungskopf der Schutzabdeckung gemäß Fig. 1,
- Fig. 4: einen schematischen Schnitt durch den Befestigungskopf entlang der Schnittlinie IV-IV nach Fig. 3 in Lösestellung der Rastvorsprünge und
- Fig. 5: eine Seitenansicht des Befestigungskopfes aus Pfeilrichtung V gemäß Fig. 3 in Fixierstellung der Rastvorsprünge.

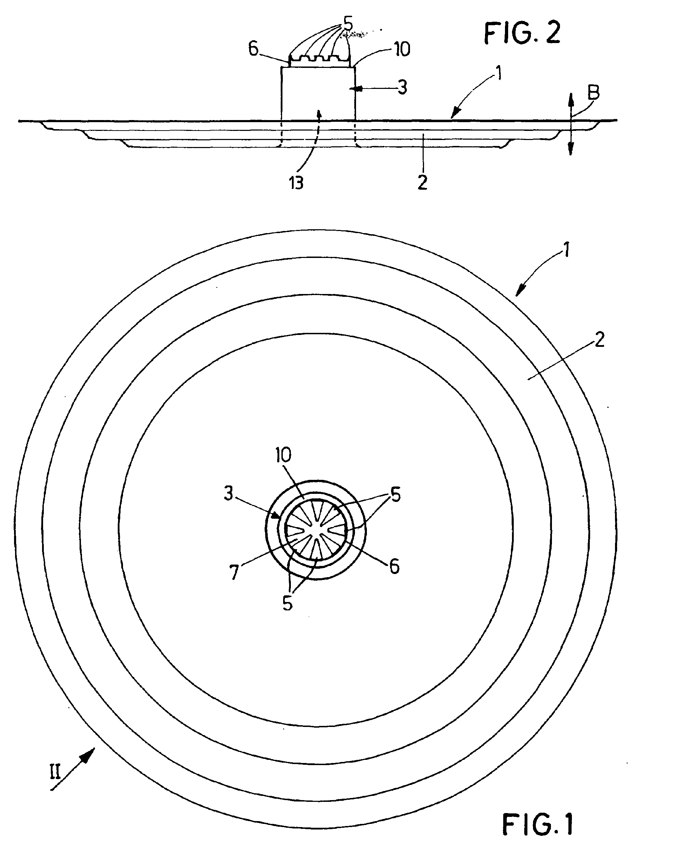

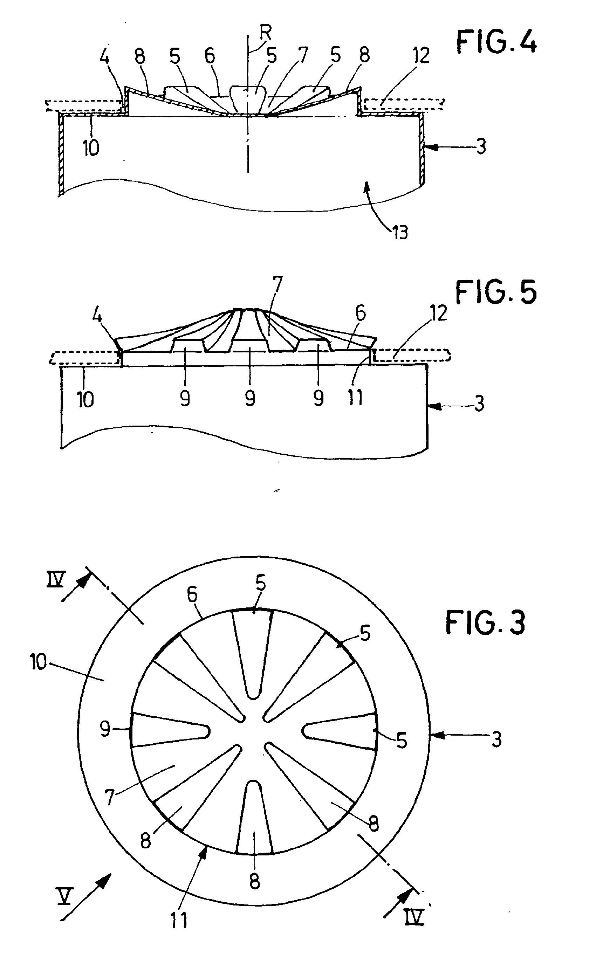

Wie aus Fig. 1 und 2 deutlich wird, besteht die aus einem Stück durch Kunststoff-Spritzguß oder Tiefziehen gefertigte Schutzabdeckung 1 aus einer in Draufsicht kreisrunden Scheibe 2 und einem zentral davon zu einer Seite herausragenden, zylindrischen Befestigungskopf 3. Wie im Folgenden noch näher erörtert wird, ist der Befestigungskopf 3 in eine zentrale Felgenöffnung 4 (Fig. 4 und 5) einsteckbar und dort verankerbar. Die Scheibe 2 selbst ist im Querschnitt mit einem Wellenprofil versehen, das die Scheibe quer zu ihrer Hauptebene biegsam macht. Dies ist durch den Doppelpfeil B in Fig. 1 angedeutet. Aufgrund dieser Biegsamkeit kann sich die Schutzabdeckung 1 an praktisch beliebige Felgenformen anpassen.

Die Verankerung der Schutzabdeckung 1 an der jeweiligen Felge erfolgt durch Rastvorsprünge 5 am Befestigungskopf 3. Diese Rastvorsprünge 5 sind an der im wesentlichen kreisförmigen Umfangskante 6 der Deckwand 7 des Befestigungskopfes 3 in etwa gleichen Abständen aneinander gereiht. Es sind zwischen acht und fünfzehn solcher Rastvorsprünge 5 vorgesehen, wobei in den Zeichnungen der Übersichtlichkeit halber nur acht solche Rastvorsprünge 5 dargestellt sind. Die Deckwand 7 selbst ist - wie ebenfalls aus Fig. 4 hervorgeht - als bistabile, nach Art einer Übertotpunkt-Kinematik zwischen einer einwärts (Fig. 4) und auswärts (Fig. 5) gewölbten Stellung umlegbare Betätigungsfläche ausgebildet. In der einwärts gewölbten Stellung nehmen die Rastvorsprünge 5 eine zurückgezogene Stellung - die Lösestellung - ein, in der sie im wesentlichen parallel zur Rotationsachse R von der Deckwand nach oben abstehen und nicht über die seitliche Kontur des kronenähnlichen Abschlusses des Befestigungskopfes 3 hinaus stehen.

Diese kronenähnlich gestaltete Form der Deckwand mit den Rastvorsprüngen 5 ist in Fig. 4 deutlich erkennbar. Die Rastvorsprünge 5 stehen nämlich wie Zacken einer Krone entlang der Umfangskante 6 verteilt. Sie sind im übrigen an den radial äußeren Enden von in die Deckwand 7 eingeformten, radial strahlenförmig verlaufenden Verstärkungsstegen 8 ausgebildet. Letztere können - wie in den Zeichnungen nicht näher dargestellt ist - in sich noch zur Stabilisierung profiliert, z. B. mit Längssicken versehen sein. Die Höhe der Verstärkungsstege 8 nimmt im übrigen vom Umfang zum Zentrum der Deckwand 7 hin kontinuierlich bis 0 ab. Die Stirnflächen 9 der Rastvorsprünge 5 (siehe Fig. 5) weisen ein trapezförmiges Profil auf.

In den Befestigungskopf 3 ist axial vor der Deckwand 7 mit den Rastvorsprüngen 5 eine radial nach außen stehende, ringförmige Anlageschulter 10 eingeformt.

Zum Festlegen der Schutzabdeckung 1 an einer Automobilfelge (punktiert dargestellt in Fig. 4 und 5) wird der Befestigungskopf 3 mit den in der zurückgezogenen Lösestellung befindlichen Rastvorsprüngen 5 und einwärts gewölbter Deckwand 7 (Fig. 4) in die Felgenöffnung 4 eingeführt und durch Betätigung der Deckwand 7 von der der Felge abgewandten Seite der Abdeckung her über den einseitig offenen Hohlraum 13 die Fixierung vorgenommen. Durch das Umlegen der gewölbten Deckwand 7 in die auswärts gewölbte Stellung werden die Rastvorsprünge radial nach außen und insbesondere über die ringförmige Mantelwand 11 vor der Anlageschulter 10 des Befestigungskopfes 3 hinaus verlagert, so daß der als Gegenrastelement dienende, umlaufende Felgenöffnungsrand 12 von den Rastvorsprüngen 5 hintergriffen und die Schutzabdeckung 1 festgelegt wird. Dabei liegt die Anlageschulter 10 an der Außenseite des Felgenöffnungsrandes 12 an.

Aufgrund der nach Art einer Übertotpunkt-Kinematik ausgelegten Betätigungsweise der Deckwand 7 ist eine zuverlässige Halterung der Schutzabdeckung 1 in der Felgenöffnung 4 gewährleistet.

## Patentansprüche

1. Schutzabdeckung für Automobilfelgen mit
- einer die Außenseite der Felge zumindest teilweise abdeckenden Ringscheibe (2), und
- einem einstückig damit ausgeformten, zentralen, im wesentlichen zylindrischen Befestigungskopf (3), der in die zentrale Öffnung (4) einer Felge einsteckbar und dort mit Hilfe von Rastvorsprüngen (5) verankerbar ist,
**dadurch gekennzeichnet, daß**
- die Rastvorsprünge (5) an der Umfangskante (6) der in die Felgenöffnung (4) eingreifenden Deckwand (7) des Befestigungskopfes (3) aneinandergereiht sind, und
- die Deckwand (7) des Befestigungskopfes (3) als bistabile, nach Art einer Übertotpunkt-Kinematik zwischen einer einwärts bzw. auswärts gewölbten Stellung umlegbare Betätigungsfläche ausgebildet ist, wobei die Rastvorsprünge (5)
= in der einwärts gewölbten Stellung der Deckwand (7) eine zurückgezogene Lösestellung im wesentlichen parallel zur Rotationsachse (R) der Schutzabdeckung (1) und
= in der auswärts gewölbten Stellung der Deckwand (7) eine radial nach außen verlagerte Fixierstellung einnehmen, in der ein Gegenrastelement (12) an der Felgenöffnung (4) hintergreifbar ist.

2. Schutzabdeckung nach Anspruch 1, **dadurch gekennzeichnet, daß** die Deckwand (7) mit den Rastvorsprüngen (5) als kronenähnlich gestaltetes Formteil ausgebildet ist.

3. Schutzabdeckung nach Anspruch 1 oder2 , **dadurch gekennzeichnet, daß** die Rastvorsprünge (5) an den radial äußeren Enden von in die Deckwand (7) eingeformten, radial verlaufenden Verstärkungsstegen (8) ausgebildet sind.

4. Schutzabdeckung nach einem der Ansprüche 1 bis 3, **dadurch gekennzeichnet, daß** die radial auswärts weisenden Stirnflächen (9) der Rastvorsprünge (5) eine trapezförmige Kontur aufweisen.

5. Schutzabdeckung nach einem der Ansprüche 1 bis 4, **dadurch gekennzeichnet, daß** der Befestigungskopf (3) axial vor der Deckwand (7) mit einer radial nach außen stehenden Ring-Anlageschulter (10) für die Felge (12) versehen ist.

6. Schutzabdeckung nach einem der Ansprüche 1 bis 5, **dadurch gekennzeichnet, daß** die Scheibe (2) im Querschnitt eine Wellenprofilierung aufweist.

## Claims

1. Protective cover for automotive wheel rims comprising
- an annular disc (2) which covers the outer face of the wheel rim at least in part, and
- a central, substantially cylindrical fastening head (3) that is formed integrally therewith and can be inserted into the central opening (4) of a wheel rim where it can be fixed with the aid of locking projections (5),
**characterised in that**
- the locking projections (5) are arranged side-by-side on the circumferential edge (6) of the covering wall (7) of the fastening head (3), which wall engages in the opening (4) of the wheel rim, and
- the covering wall (7) of the fastening head (3) is constructed as a bistable actuating face which is kinematically reversible beyond the dead centre between an inwardly and outwardly curved position, the locking projections (5)
= adopting in the inwardly curved position of the covering wall (7) a retracted release position substantially parallel to the axis of rotation (R) of the protective cover (1) and
= adopting in the outwardly curved position of the covering wall (7) a radially outwardly displaced fixing position, behind which a counter-locking element (12) on the opening (4) of the wheel rim is able to engage.

2. Protective cover according to claim 1, **characterised in that** the covering wall (7) with the locking projections (5) is constructed as a shaped part with a crown-like configuration.

3. Protective cover according to claim 1 or 2, **characterised in that** the locking projections (5) are formed on the radially outer ends of radially extending reinforcing webs (8) formed in the covering wall (7).

4. Protective cover according to any one of claims 1 to 3, **characterised in that** the radially outwardly directed end faces (9) of the locking projections (5) have a trapezoidal contour.

5. Protective cover according to any one of claims 1 to 4, **characterised in that** axially in front of the covering wall (7) the fastening head (3) is provided with a radially outwardly projecting annular contact shoulder (10) for the wheel rim (12).

6. Protective cover according to any one of claims 1 to 5, **characterised in that** the disc (2) has a corrugated profile in cross-section.

## Revendications

1. Couvercle de protection pour jantes de véhicule automobile avec
- un disque annulaire (2) recouvrant au moins en partie la face extérieure de la jante et
- une tête de fixation (3) centrale essentiellement cylindrique moulée d'un seul tenant avec le disque, qui peut être emboîtée dans l'orifice central (4) d'une jante et y être ancrée à l'aide de saillies à crans (5),
**caractérisé en ce que**
- les saillies à crans (5) sont alignées les unes sur les autres sur le bord de la circonférence (6) de la paroi de couverture (7) de la tête de fixation (3) qui entre en prise dans l'orifice de la jante (4) et
- **en ce que** la paroi de couverture (7) de la tête de fixation (3) est réalisée sous forme de surface d'actionnement bistable rabattable entre une position bombée vers l'intérieur et/ou vers l'extérieur à la manière d'une cinématique de dépassement du point mort, les saillies à crans (5)
= prenant une position de desserrage en retrait essentiellement parallèle à l'axe de rotation (R) du couvercle de protection (1) dans la position bombée vers l'intérieur de la paroi de couverture (7) et
= une position de fixation décalée de manière radiale vers l'extérieur, dans laquelle une entrée en prise derrière un élément à crans opposés (12) sur l'orifice de la jante (4) est possible dans la position bombée vers l'extérieur de la paroi de couverture (7).

2. Couvercle de protection selon la revendication 1, **caractérisé en ce que** la paroi de couverture (7) est réalisée avec les saillies à crans (5) sous forme de pièce moulée configurée comme une couronne.

3. Couvercle de protection selon la revendication 1 ou 2, **caractérisé en ce que** les saillies à crans (5) sont réalisées sur les extrémités extérieures radiales d'étais de renforcement (8) à orientation radiale moulés dans la paroi de couverture (7).

4. Couvercle de protection selon l'une quelconque des revendications 1 à 3, **caractérisé en ce que** les surfaces frontales (9) dirigées de manière radiale vers l'extérieur des saillies à crans (5) présentent un contour en forme de trapèze.

5. Couvercle de protection selon l'une quelconque des revendications 1 à 4, **caractérisé en ce que** la tête de fixation (3) est dotée dans le sens axial devant la paroi de couverture (7) d'une épaule d'appui annulaire (10) dépassant vers l'extérieur pour la jante (12).

6. Couvercle de protection selon une des revendications 1 à 5, **caractérisé en ce que** le disque (2) présente un profilé ondulé dans la section transversale.
